# EUROPEAN PATENT SPECIFICATION

(11) **EP 3 829 008 B1**
(45) Date of publication and mention of the grant of the patent: **09.04.2025**
(21) Application number: 19211606.9
(22) Date of filing: 26.11.2019
(51) Int. Cl.: H01R 13/6589, H01R 13/6593, H01R 9/05

(54) **CABLE RETAINER INSERT AND CONNECTOR FOR SHIELDING TRANSFER**
KABELHALTER-EINSATZ UND STECKVERBINDER ZUR SCHIRMÜBERTRAGUNG
INSERT DE RETENUE DE CÂBLE ET CONNECTEUR POUR TRANSFERT DE BLINDAGE

(43) Date of publication of application: 02.06.2021
(73) Proprietor: TE Connectivity Germany GmbH, 64625 Bensheim (DE)
(72) Inventor: KIDANE, Abiel, 68169 Mannheim (DE); HERRMANN, Andreas, 64560 Riedstadt (DE); KOESTER, Jens, 64380 Rossdorf (DE)
(74) Representative: Grünecker Patent- und Rechtsanwälte PartG mbB

(56) References cited:
- EP-A1- 2 985 840
- EP-A1- 3 101 737
- DE-B3- 102010 051 954
- JP-A- 2011 249 061
- US-A- 5 246 376
- US-B1- 6 227 881

## Description

The invention relates to a cable retainer insert for a multi-strand cable, the cable retainer being configured to be inserted in a housing of a connector. The invention further relates to a connector.

In the art, multi-strand cables combine shielded and unshielded strands in one cable. Such cables may be applied for power transmission combined with data transmission. In prior art solutions, the transmission of a shielding and the protective earth connection via a metal housing is cumbersome, such that connector backshells terminating a multi-strand cable are not versatile.

US 5,246,376 A discloses an adaptor for an electrical connector which enables the screens of a number of screened electrical wires to be terminated and which will provide electromagnetic shielding for the wires; which comprises: (i) an electrically conductive body having an aperture through which the wires are intended to pass; (ii) an electrically conductive shielding member that can be positioned in the aperture substantially to close the aperture, the member having a plurality of recesses opening onto the periphery: (iii) a plurality of electrically conductive hollow deformable ferrules that are capable of receiving one or more wires so that the wires extend through and beyond the ferrules and the ferrules can be electrically connected to the screen of the wire or wires extending there through, each ferrule being capable of being held in one of the recesses in the periphery of the shielding member by deformation of the ferrule but being capable of being removed from the recess; (iv) a locking ring that can engage and be tightened on the body in order to retain the shielding member and ferrules in the aperture; and (v) means for holding the ferrules securely in the recesses when the locking ring is tightened on the body.

JP 2011 249061 relates to a connector with which stable transmission by suppressing variance in connection relation between a shield cable and the connector. The connector includes a contact; an inner holding member having a holding recess formed corresponding to the contact; an outer holding member having a housing portion, which houses the inner holding member, on a rear-end side; and a shell which is connected to a shield member and covers the outer holding member. The contact is fitted to an exposed conductive portion of an insulation wire of a shield case. The holding recess is configured to receive both a part of the contact and an exposed insulation portion of the insulation wire along a direction orthogonal to the front-rear direction of the connector.

One aspect of the present invention is to improve prior art solutions of cable retainer inserts and connectors receiving such, in view of a shielding transfer provided and their versatility.

The cable retainer insert of the present invention has a cable contact portion and a plurality of circumferentially spaced cable receptacles, each cable receptacle being configured to receive at least one strand of the multi-strand cable, each cable receptacle further comprising a cable strand insertion opening at a radially outward end, and a bottom at an opposite radially inward end, wherein a circle inscribed in the cable receptacle and touching the bottom of the cable receptacle extends radially outwards beyond the cable strand insertion opening. The inventive cable retainer insert is characterized by comprising a housing contact portion for electrically contacting the housing of the connector. A diameter of the cable contact portion is smaller than a diameter of the housing contact portion. Moreover, the cable receptacles extend through both the cable contact portion and the housing contact portion.

A connector according to the invention comprises a connector housing configured to receive a cable retainer insert, a cable retainer insert of the invention, a cable having an outer shielding and a multitude of cable strands with strand shieldings, wherein the cable contact portion is inserted into the outer shielding and at least one of the multitude of cable strands is inserted in the cable receptacle, wherein the cable retainer insert is electrically contacted by the strand shieldings of the cable strands in the cable receptacles, and wherein the outer shielding is arranged between the cable strand insertion openings and a clamping mechanism which extends circumferentially across the cable retainer insert.

The cable retainer insert and the connector according to the invention have the advantage that both an unshielded strand (e.g. a protective earth strand) and a shielded strand of a multi-strand cable may be securely received and held within the corresponding cable receptacle. The strand or the shielding of the strand may further be electrically contacted in a reliable way. The circle inscribed into the cable receptacle represents a cable diameter of a cable which is fully inserted into the cable receptacle. As the circle protrudes from the cable receptacle, so does the cable. This facilitates friction and clamping of the cable in the cable retainer insert. Providing a housing contact portion has the advantage that contacting the different shieldings of the multi-strand cable may be functionally separated from a connection to the housing of a connector. Leveling all shieldings to a common electrical potential may therefore not be disturbed by contacting the housing. A continued 360° shielding is therefore guaranteed and may not be disturbed by any possible incorrect contacting of the housing contact portion and the housing of the connector.

In the following, further advantageous embodiments of the present invention will be described. These embodiments comprise additional technical features, which may be arbitrarily combined with each other or may be omitted if the technical effect obtained by the omitted technical feature is not essential to the present invention. The embodiments that will be described in the following are exemplary and do not limit the present invention.

The inventive connector may be a connector backshell for terminating a wire. It may in particular be applied in the agricultural sector, i.e. a connector in compliance with Agricultural Industry Electronic Foundation (AEF) standards. It may be applied to provide connectivity between a tractor and e.g. a tractor-trailer or tractor implements. The inventive connector has the advantage that an overall cable shielding of the multi-strand cable or a shielding of each strand of the multi-strand cable is reliably transferred to the connector, such that each shielded cable is continuously provided with a 360° shielding.

The inventive cable retainer insert and the connector may be applied in different technological fields in which a reliable transfer of a shielding is required. The present invention may preferably be applied in the field of agricultural industry, in particular for electric devices being connected to each other.

A multi-strand cable may contain different strands of different functionality. Exemplarily, it may comprise power strands for transmitting electric current or power, data strands for transmitting data signals and a protective earth strand. Each strand may have its own shielding. An arbitrary number of each of those strands may be present. Moreover, multi-strand cables may comprise an outer shielding that surrounds all strands of the multi-strand cable. This continuous 360° shielding is to be transferred and maintained by the inventive connector.

Each of the strands of the multi-strand cable may be provided with a ferrule which is surrounding the corresponding strand. Said ferrule may further comprise an outer contact ferrule comprising spring wires or lamellas, wherein each spring wire or each lamella is deflectable against the radial direction and provides an individual contact point. The outer contact ferrule may thus comprise a multitude of circumferentially arranged contact points.

The shielding of a strand may be electrically connected to said ferrule by means of electromagnetic pulse technology, which represents a method connecting different materials with each other by means of an electromagnetic pulse that accelerates the different parts to be joined together via a strong electromagnetic field. Said parts are accelerated in opposite directions towards each other, wherein both parts are substance-to-substance bonded with each other. However, any suitable means for electrically connecting the shielding of a strand with the ferrule, as well as connecting the ferrule electrically with the cable retainer insert may be applied.

The cable contact portion of the cable retainer insert may have an outer contour in the shape of a circle, wherein said circle may be interrupted by the insertion openings (at least one insertion opening) of the cable receptacles. The cable receptacles may be formed as grooves that extend axially and are open at both axial ends of the cable retainer insert.

The cable retainer insert may comprise a plug end face, a cable end face both facing in the axial direction, as well as an outside contour which extends circumferentially between the two end faces. The end faces may be located parallel to each other displaced in an axial direction, wherein the cable receptacles extend from the plug end face to the cable end face. The cable receptacles may open out into the outside contour of the cable retainer insert. They may thus open out in a radial direction, which is oriented perpendicular to the axial direction.

The cable strand insertion opening may be an opening from which a strand may be inserted into the cable receptacle of the cable retainer insert. The bottom of the cable receptacle may in particular be arcuate or may be semicircular in a cross-section being perpendicular to the axial direction.

The circle inscribed in the cable receptacle is an incircle or inscribed circle, being the largest circle contained in the cable receptacle and touching its bottom. Such an inscribed circle touches the cable receptacle in at least three points. The inscribed circle extends radially outwards beyond the cable strand insertion opening. The incircle may also extend beyond an excircle or escribed circle of the cable contact portion.

The cable retainer insert may be further improved in that the cable retainer insert is electrically conductive. This has the advantage that each shielding may be brought in mechanical and consequently electrical contact with the cable retainer insert, thereby leveling each of the shieldings to a common electric potential.

The inventive cable retainer insert may further comprise at least two cable retainer insert modules, which are positioned adjacent to one another in a circumferential direction. This embodiment has the advantage that the cable retainer insert may be flexible during assembly and that an almost arbitrary number of possible combinations of strands of different number and/or size may be reliably held and contacted by means of the cable retainer insert comprising at least two cable retainer insert modules. The cable retainer insert modules may thus form the cable retainer insert. If two cable retainer insert modules are comprised they may have a form similar to a half circle. If three or more cable retainer insert modules are provided, they may have a shape similar to a circular sector. A preferred embodiment provides four cable retainer insert modules shaped similar to a circular sector with an angle of 90°. Any other number of cable retainer insert modules may be applied.

In a further embodiment of the inventive cable retainer insert, each cable retainer insert member may comprise at least one cable receptacle. A multitude of cable receptacles may be provided in a cable retainer insert module.

As the diameter of the housing contact portion is larger than the diameter of the cable contact portion, contacting of the housing via the housing contact portion does not influence or (negatively) effect receiving and contacting the strands of the multi-strand cables in or via the cable receptacle.

The at least one cable receptacle extends through both the cable contact portion and the housing contact portion. The cable contact portion and/or the housing contact portion may have a shape similar to a cylinder. In the case of the embodiment of the cable retainer insert comprising at least two cable retainer insert modules, those modules may have a shape similar to a cylindrical section. The cylindrical section may comprise a cylindrical section of the cable contact portion and a cylindrical section of the housing contact portion. Preferably, the cylindrical sections of the cable contact portion and the housing contact portion have the same angle.

In a further embodiment of the inventive cable retainer insert, an axial length of the cable contact portion may be larger than an axial length of the housing contact portion. The axial length is measured along the axial direction.

In an assembled state, the cable contact portion and/or the housing contact portion may correspond to a cylindrical shape, wherein a height of said cylinders may be defined along the axial direction, which is oriented perpendicular to the radial direction. The height of the cylinder describing the cable contact portion may be larger than the height of the cylinder describing the housing contact portion.

In a preferred embodiment, the cable retainer insert has at least one circumferential groove. The at least one circumferential groove may comprise a groove bottom facing in the radial direction.

The groove bottom may be located at a third radius, wherein the circle inscribed in the cable receptacle may extend beyond this third radius. In this embodiment, edges may be provided on both sides of the groove, wherein the edges are circumferentially arranged and limit the groove in and against the axial direction. In this embodiment, the inscribed circle extends radially outwards beyond the cable strand insertion opening and beyond the third radius. The cable strand insertion opening is at a radial height of the bottom of the groove. The groove is interrupted in a circumferential direction by the cable strand insertion openings. The cable strand insertion opening is recessed radially inwards at a position where the bottom of the groove crosses the cable receptacle.

This embodiment may be further improved by providing a clamping mechanism, which is configured to be inserted into the circumferential groove and configured to extend across the cable strand insertion opening in the circumferential direction. Preferably, the circumferential groove is provided at the cable contact portion and the clamping mechanism is configured to be inserted into the circumferential groove at the cable contact portion.

This has the advantage that the circumferential groove predetermines a position of the clamping mechanism and that once the clamping mechanism is installed to the cable retainer insert, its position is fixed by the circumferential groove.

Application of this embodiment of the cable retainer insert in the housing of the connector may securely fix the position of the outer shielding with respect to the cable retainer insert by means of the clamping mechanism. As the circle inscribed into the cable receptacle extends beyond the bottom of the circumferential groove, a shielding of a strand or a strand received in the cable receptacle also extends beyond the cable strand insertion opening at a position where the bottom of the groove crosses the cable receptacle. The outer shielding is displaced into the circumferential groove as well as towards the cable strand insertion opening by the clamping mechanism, thereby reliably electrically contacting the shielding of the strands and strands with the outer shielding and the cable retainer insert. At the same time, the clamping mechanism presses the outer shielding into the circumferential groove against the bottom of the circumferential groove in between adjacent cable strand insertion openings.

The cable strand insertion openings are located either at an outer contour of the cable contact portion or at the bottom of the circumferential groove provided in the cable contact portion. A clamping member may also be provided in an embodiment of the inventive cable retainer insert without a circumferential groove.

As the clamping mechanism extends across the cable strand insertion opening in the circumferential direction, a circular strand with a diameter corresponding to the inscribed circle is in any case in electrical contact with the outer shielding due to the clamping mechanism.

In a further advantageous embodiment of the inventive cable retainer insert, a second, preferably circumferential, groove may be provided, which is configured to receive a radially elastic member. This second groove may be provided in particular in the housing contact portion and the radially elastic member is preferably electrically conductive.

Further, the cable contact portion and the housing contact portion are preferably monolithically connected to each other. Thus, the electrical potential provided by the outer shielding and/or the shieldings of the strands and/or a protective earth strand, are levelled and provided at the cable contact portion as well as at the housing contact portion. Thus, the electrically conductive radially elastic member may be configured to establish an electric contact between the cable retainer insert and the housing of the connector.

The electrically conductive radially elastic member may be a continuous coil spring, i.e. a coil spring which is connected at its two ends, e.g. by welding, or may be a circular self-locking ring, i.e. a metallic ring comprising elastic contact latches (leaf springs) deflectable in and against the radial direction. The latter embodiment of the radially elastic member may for instance be a circular V-spring.

It is particularly advantageous if the first and/or the second groove are open in a radially outward direction. This has the advantage that the clamping mechanism and/or the radially elastic member are on the one hand applied for electrical contacting and on the other hand may be applied for holding cable retainer insert modules in a fixed position to each other.

Thus, in a preassembled state, in which the strands of the multi-strand cable are received in a corresponding cable receptacle, the outer shielding is placed over the cable contact portion. The clamping mechanism may be installed at or around the cable contact portion and the clamping mechanism and/or the radially elastic member may releasably fix the position of the cable retainer insert modules and the strands relative to each other.

The inventive cable retainer insert may be further improved by providing a center through hole, which extends in an axial direction. Such a center through hole has the advantage that strands of the multi-strand wire, which do not have or do not require a shielding, may be easily fed through the cable retainer insert via the center through hole. However, strands without individual shielding may nevertheless be shielded by the outer shielding.

In a further embodiment of the inventive cable retainer insert, a center insert module may be provided in the center through hole. The center insert module may comprise a polymer, preferably a nonconductive polymer and more preferably and elastomer.

In an embodiment comprising at least two cable retainer insert modules, these modules may be arranged on the outer circumferential surface of the center insert module. The center insert module may have a through hole for receiving at least one strand of the multi-strand wire. The material of the center insert module may have a lower hardness than the material of the cable insert modules. The center insert module may be vibration-reducing or vibration-isolating.

Any of the embodiments of the cable retainer insert may be applied in the inventive connector. The connector is preferably a connector backshell and more preferably a connector backshell applied in agricultural industry.

The inventive connector allows for terminating a multi-strand cable without deterioration of a shielding provided by said cable. The connector thus allows for a continuous 360° shielding, which is not interrupted by the connector itself.

By means of a modular cable retainer insert, i.e. a cable retainer insert comprising at least two cable retainer insert modules, the inventive connector may be adapted to or applied for a wide variety of multi-strand cables and is thus very versatile.

If technical features in the previous description are introduced in singular or plural form, it is not excluded that more than one or only one of said technical features is provided.

In the following, the present invention will be described with reference to the accompanying figures, which show exemplary embodiments. The present invention shall not be limited to the embodiments described below. In the following description of the figures, some technical features and technical features having the same technical effect are denoted using the same reference numeral. A repetitive description of technical features already introduced will be avoided, whereas differences will be explicitly given.

The figures show:
- Fig. 1 and Fig. 2: a first embodiment of the inventive cable retainer insert;
- Fig. 3 and Fig. 4: a second embodiment of the inventive cable retainer insert;
- Fig. 5-Fig. 7: a perspective and side view of the second embodiment of Figs. 3 and 4;
- Fig. 8: a side view of the first embodiment of Figs. 1 and 2;
- Fig. 9-Fig. 13: different assembly steps of the inventive connector;
- Fig. 14: a third embodiment of the inventive cable retainer insert in a preassembled state;
- Fig. 15: a further embodiment of the inventive connector;
- Fig. 16-Fig. 19: a further embodiment of the inventive cable retainer insert; and
- Fig. 20: a further embodiment of the inventive connector.

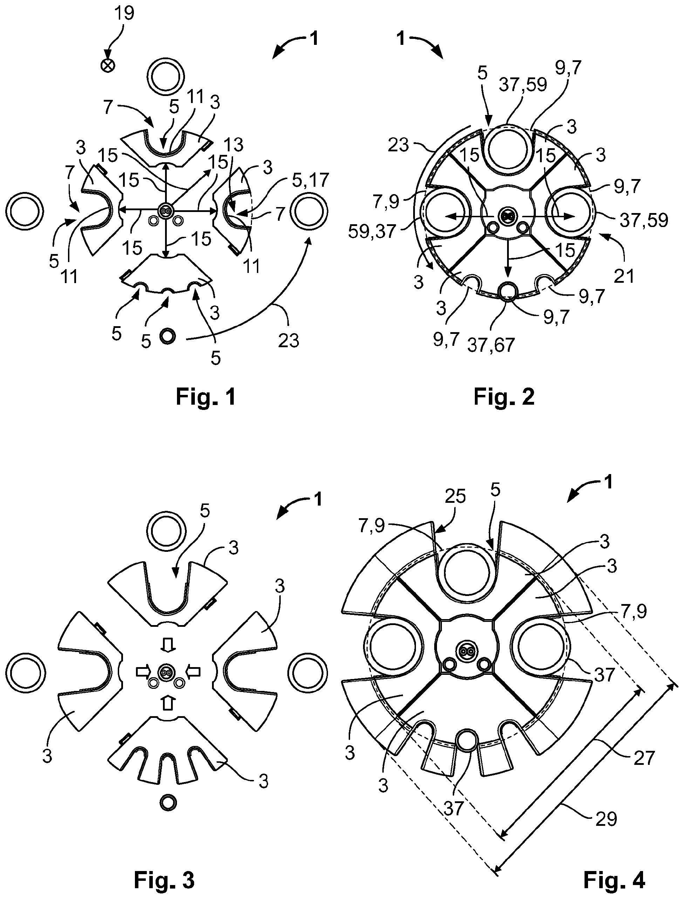

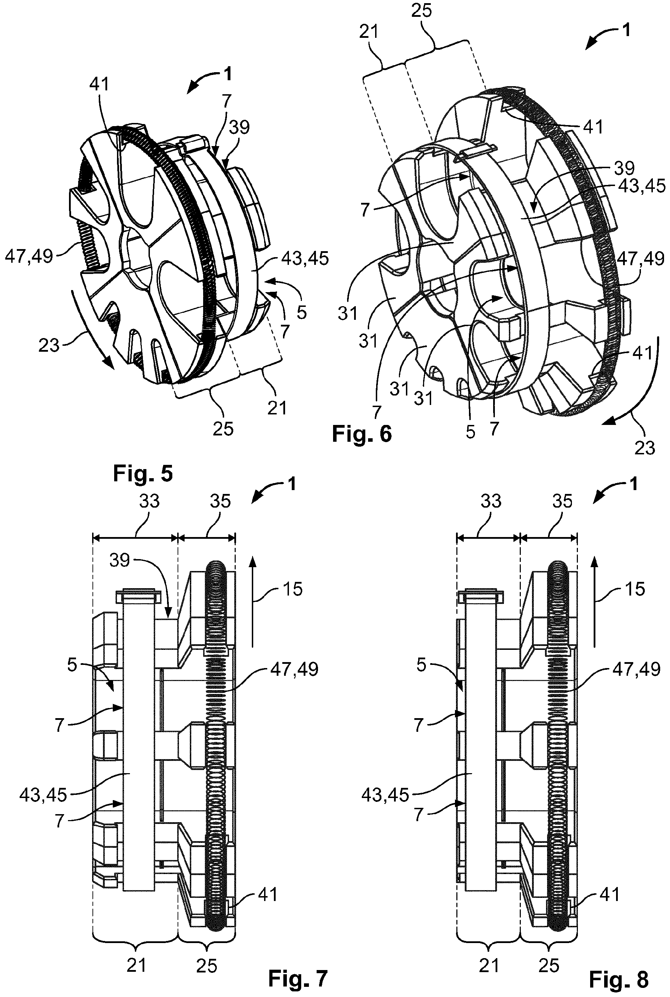

In Figs. 1 to 8, different views of the inventive cable retainer insert 1 are shown. A first embodiment is shown by Fig. 1 and Fig. 2, a second embodiment by fig. 3 to Fig. 7 and a third embodiment by Fig. 8.

All embodiments of the cable retainer insert 1 comprise four cable retainer insert modules 3. The embodiments shown are only exemplary embodiments, i.e. a different number of cable retainer insert modules 3 may be provided. In a further embodiment of the inventive cable retainer insert 1, the cable retainer insert 1 is one single piece, i.e. not modular.

In the embodiments shown, each of the cable retainer insert modules 3 comprises at least one cable receptacle 5, wherein one of the cable retainer insert modules 3 comprises three cable receptacles 5. For the sake of clarity, only in Fig. 1 are all cable receptacles 5 provided with a reference numeral.

Each of the cable receptacles 5 comprises a cable strand insertion opening 7, which is, in a radial direction 15, located at an outward end 9 . For clarification, in Fig. 1 the cable strand insertion opening 7 of the right cable retainer insert module 3 is indicated by a dashed line.

Opposite the outward end 9, each cable receptacle 5 comprises a bottom 11 at a radially inward end 13. The cable receptacles 5 therefore extend in the radial direction 15 and open out into the radial direction 15 and further correspond to a groove 17 in an axial direction 19, which is oriented into the drawing plane and which is open in and against the axial direction 19. The cable receptacles 5 are arranged in a circumferential direction 23, which is perpendicular to the radial direction 15.

The four cable retainer insert modules 3 of the first embodiment constitute a cable contact portion 21 of the cable retainer insert 1. It is noted that the sense of rotation of the circumferential direction 23 is not important and only a question of definition.

In the case of the second and third embodiment of the inventive cable retainer insert 1, the cable contact portion 21 is best seen in Fig. 5 to Fig.8.

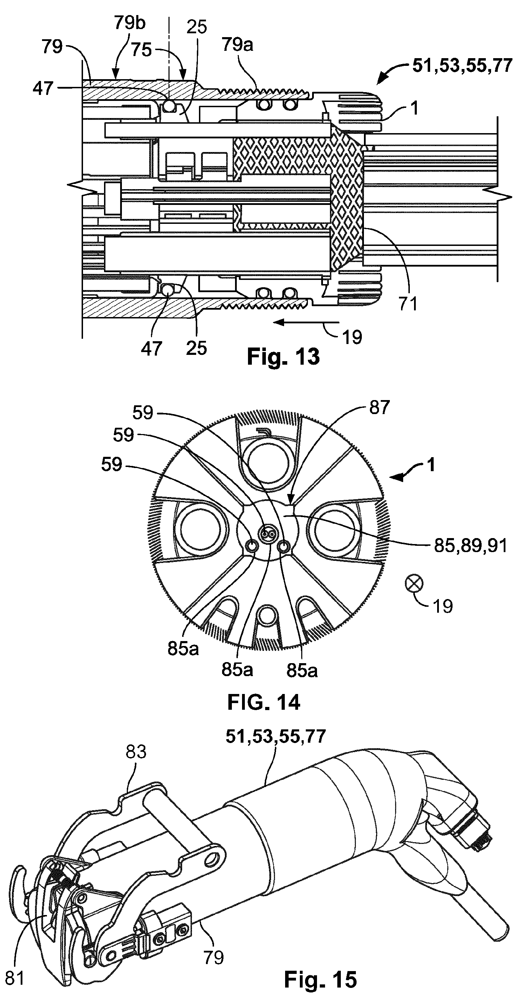

The second and third embodiment of the inventive cable retainer insert 1 further comprise a housing contact portion 25. This housing contact portion 25 is configured for electrically contacting a housing of a connector (see Fig. 13).

A diameter 27 of the cable contact portion 21 is smaller than a diameter 29 of the housing contact portion 25. This is indicated in Fig. 4.

As can be seen in the perspective view shown in Fig. 5 and Fig. 6, the cable contact portion 21 and the housing contact portion 25 are both cylindrical, wherein the cable retainer insert modules 3 of all embodiments shown are cylindrical sections 31 (the cylindrical sections 31 are only indicated by reference numerals in Fig. 6) .

As can be best seen in Fig. 7 and Fig. 8, an axial length 33 of the cable contact portion 21 is larger than an axial length 35 of the housing contact portion 25.

In Fig. 2, it is indicated that an inscribed circle 37 (also: incircle 37) in the cable receptacle 5, which touches the bottom 11 of the cable receptacle 5 extends radially, i.e. in the radial direction 15 outwards beyond the cable strand insertion opening 9. This is the case for all cable receptacles 5, independent on their size.

It is noted that the bottom 11 of the cable receptacles 5 shown is formed as a half circle, where in different embodiments a different shape of the bottom 11 is conceivable. In such a case (not shown) the incircle 37 touches the cable receptacle 5 at at least three points. In any case, the incircle extends in the radial direction 15 beyond the cable strand insertion opening 7, also in the embodiments having a housing contact portion 25 (see Fig. 4).

As shown in Fig. 5 to Fig. 7, the cable contact portion 21 comprises a first circumferential groove 39. This first circumferential groove 39 is not present in the third embodiment shown in Fig. 8.

Further, Fig. 5 to Fig. 8 show that a clamping mechanism 43, in the form of a bandstrap 45 is provided at the cable contact portion 21 (Fig. 8), respectively in the first circumferential groove 39 of the cable contact portion 21 (Fig. 5 to Fig. 7).

The clamping mechanism 43 extends across the cable strand insertion openings 7 in the circumferential direction 23.

Further, a second circumferential groove 41 is provided in the housing contact portion 25. This second circumferential groove 41 is configured to receive a radially elastic member 47 which may be embodied as a continuous coil spring 49.

As can be seen in Fig. 5 to Fig. 8, the first 39 and the second circumferential groove 41 both extend and open out into the radial direction 15.

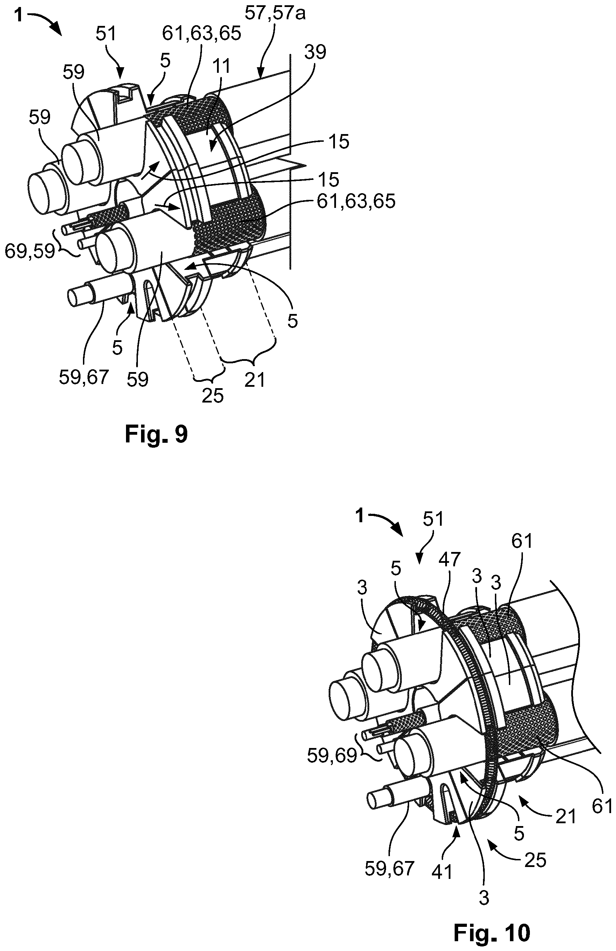

In the following, Fig. 9 to Fig. 13 show different assembly steps for an inventive connector 51. The inventive connector 51 may in particular be a connector backshell 53 and preferably an agricultural industry connector 55 (see Fig. 13 and Fig. 15).

In Fig. 9, a multi-strand cable 57 is provided, which comprises a multitude of cable strands 59, wherein some cable strands 59 may comprise a shielding 61 in the form of a mesh 63 or braid wire 65. The multi-strand cable 57 may further comprise a protective earth strand 67 and several data strands 69. The multi-strand cable 57 may in particular be a round hybrid cable 57a.

In the embodiment shown, in some of the cable receptacles 5 a cable strand 59 is received. Due to the geometry of the cable receptacles 5 (see the description referring to the incircle 37 above) the cable strand 59, in particular the protective earth strand 67 and the shielding 61 extend radially outer walls beyond the cable strand insertion opening 7. In Fig. 9 to Fig. 13 the insertion opening 7 is not shown, but Fig. 4 is referred to, in which the inscribed circles 37 may represent the three cable strands 59 having a shielding 61 and the protective earth strand 67.

Consequently, each shielding 61 and the protective earth strand 69 extend in the radial direction 15 beyond the bottom 11 of the first circumferential groove 39.

In Fig. 10, the radially elastic member 47 is provided in the second circumferential groove 41 of the housing contact portion 25 , thereby fixing the position of the four cable retainer insert modules 3.

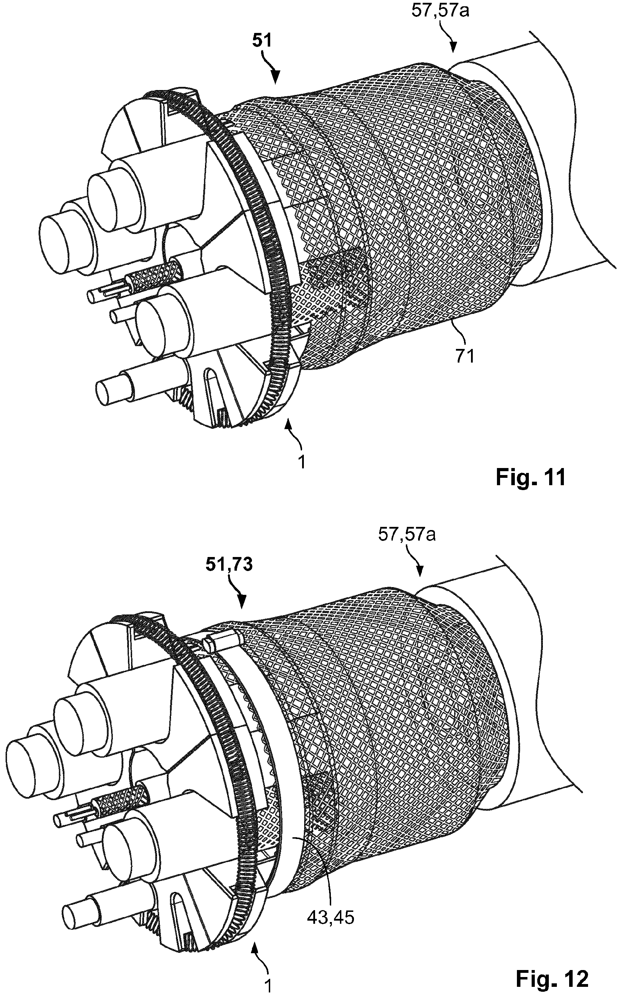

In Fig. 11, it is shown that the multi-strand cable 57 also comprises an outer shielding 71 which is not shown in Fig. 9 and Fig. 10 for the sake of clarity. The cable contact portion 21 is inserted into the outer shielding 71.

In Fig. 12, the clamping mechanism 43 in the form of the bandstrap 45 is inserted in the first circumferential groove 39. Thereby the outer shielding 71 is pressed against the bottom 11 of the first circumferential groove 39 as well as against the shieldings 61 and against the protective earth strand 67 (this is for instance visible in Fig. 14). As the cable retainer insert 1 is electrically conductive, it is electrically contacted by the shieldings 61 of the cable strands 59 and by the outer shielding 71. In this preassembly state 73, the outer shielding 71 is arranged between the cable strand insertion openings 7 (covered by the outer shielding 71 and the bandstrap 45) and the clamping mechanism 43.

Finally, as shown in Fig. 13 and Fig. 15, the cable retainer insert 1 is received in a connector housing 75, thereby forming the connector 51 in the assembled state 77.

It can be seen in Fig. 13 that the outer shielding 71 and (not visible) the protective earth strand 69 and the other shieldings 61 are connected to a metallic housing portion 79 of the housing 75 via the housing contact portion 25 and the radially elastic member 47. A backward portion 79a of the metallic housing portion 79 overlaps with the outer shielding 71, thereby providing an uninterrupted shielding of all strands 59 of the multi-strand cable 57.

The metallic housing portion 79 further comprises a forward portion 79b further providing shielding in the axial direction 19.

Fig. 15 shows the entire connector 51, which also comprises a front cover member 81, which is attached to the metallic housing portion 79 by a holding mechanism 83.

In Fig. 14, a further embodiment of the inventive cable retainer insert 1 is shown. This embodiment provides a center insert module 85 that is located in a center through hole 87. The center through hole extends in the axial direction 19. The center insert module 85 may comprise a polymer 89 and may preferably be nonconductive or elastic to reduce vibrations of the data strands 59 that are received in through holes 85a in the center insert module 85. The center insert module 85 may also comprise an elastomer 91.

Figs. 15 to 19 show a further embodiment of the inventive cable retainer insert 1, which differs from the previously shown embodiments of the cable retainer insert 1 in that only one cable retainer insert module 3 is provided. This cable retainer insert 1 is thus not modular.

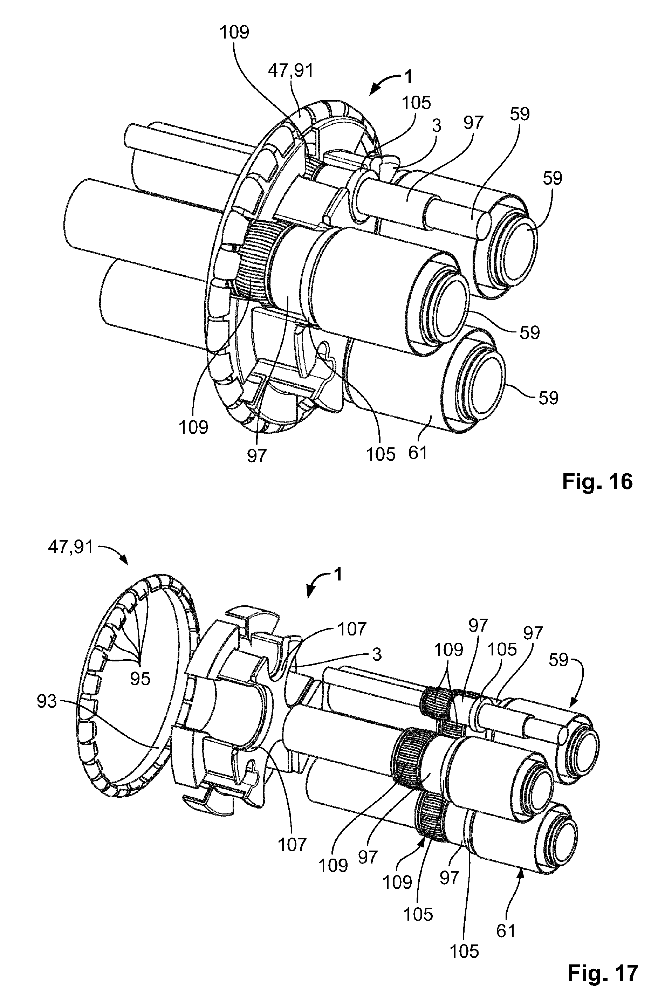

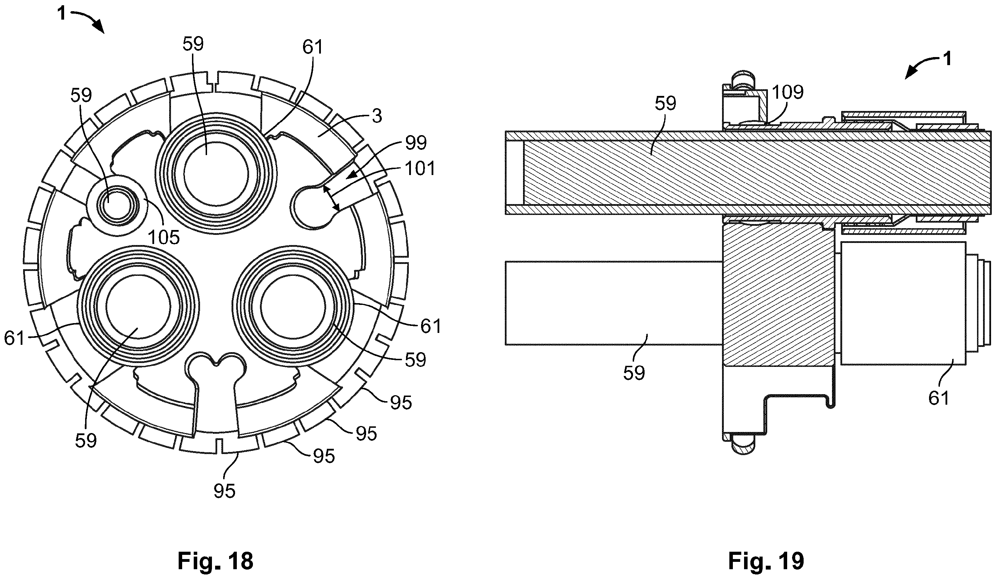

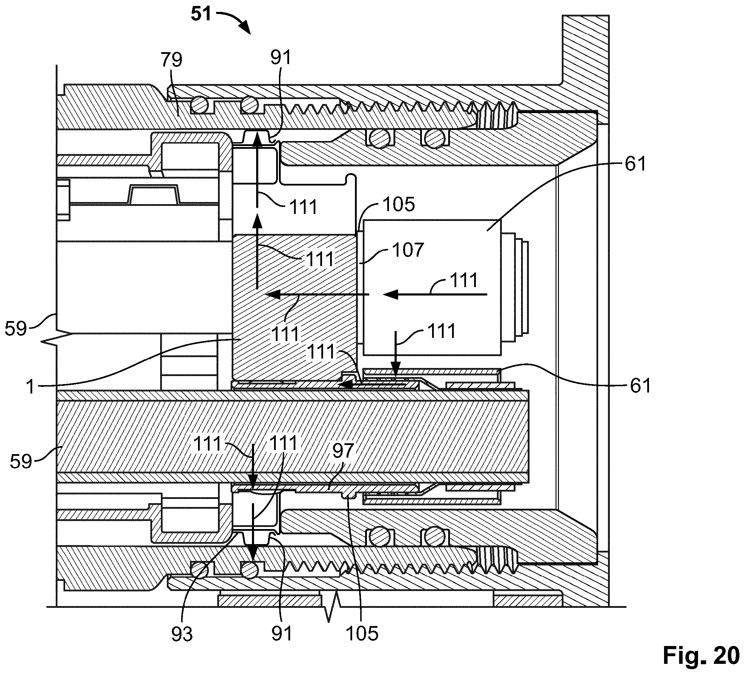

This embodiment of the inventive cable retainer insert 1 shown in Figs. 16 to 20 further comprises another embodiment of the radially elastic member 47, which is a circular leaf spring member 91 that comprises a circumferential base spring 93 (see Figs. 17 and 20) and a multitude of leaf springs 95. The circular leaf spring member 91 may also be denoted as a circular self-locking ring. In Figs. 17 and 18, only some of the circumferentially arranged leaf springs 95 are provided with a reference numeral. Such a circular leaf spring member 91 provides electrical and mechanical connection between the cable retainer insert 1 and the metallic housing portion 79 of the connector 51 (see Fig. 20).

The cable strands 59 shown in Figs. 16 to 20 are provided with a ferrule 97 which is electrically connected to the shielding 61 of the corresponding cable strand 59 via electromagnetic pulse technology.

The embodiment of the inventive cable retainer insert 1 shown in Figs. 16 to 20 further comprises differently shaped cable receptacles 5, best seen in Fig. 18. Such a maintaining receptacle 99 has a minimum insertion diameter 101 that is smaller than a ferrule insertion diameter 103. It is to be noted that the ferrule 97 may comprise a guiding collar 105 for positioning the ferrule 97 with respect to the cable retainer insert 1 by interaction with the guiding collar 105 with a stop shoulder 107. The ferrule 97 further comprises a lamella sleeve 109 that provides a multitude of individually deflectable lamellas (not provided with reference numerals) for providing an electrical contact between the ferrule 97 and the cable retainer insert 1. In Fig. 19, the contacting of the lamella sleeve 109 with the cable retainer insert 1 is shown in a cut view. Further, Fig. 20 denotes the transfer of an electric potential of the shieldings 61 by means of a transfer path 111 indicated by arrows. Said path 111 is from the shieldings 61 via the ferrule 97 to the cable retainer insert 1 and further via the circular leaf spring member 91 to the metallic housing portion 79 of the connector 51. It is to be noted that in Fig. 20, the circular leaf spring member 91 is compressed when being in contact with the metallic housing portion 79.

### REFERENCE SIGNS

- 1: cable retainer insert
- 3: cable retainer insert module
- 5: cable receptacle
- 7: cable strand insertion opening
- 9: outward end
- 11: bottom
- 13: inward end
- 15: radial direction
- 17: groove
- 19: axial direction
- 21: cable contact portion
- 23: circumferential direction
- 25: housing contact portion
- 27: diameter of the cable contact portion
- 29: diameter of the housing contact portion
- 31: cylindrical sections
- 33: axial length of the cable contact portion
- 35: axial length of the housing contact portion
- 37: inscribed circle/incircle
- 39: first circumferential groove
- 41: second circumferential groove
- 43: clamping mechanism
- 45: bandstrap
- 47: radially elastic member
- 49: continuous coil spring
- 51: connector
- 53: connector backshell
- 55: agricultural industry connector
- 57: multi-strand cable
- 57a: round hybrid cable
- 59: cable strand
- 61: shielding
- 63: mesh
- 65: braid wire
- 67: protective earth strand
- 69: data strand
- 71: outer shielding
- 73: preassembly state
- 75: connector housing
- 77: assembled state
- 79: metallic housing portion
- 79a: backward portion
- 79b: forward portion
- 81: cover member
- 83: holding mechanism
- 85: center insert module
- 85a: through hole
- 87: center through hole
- 89: polymer
- 91: circular leaf spring member
- 93: circumferential base ring
- 95: leaf spring
- 97: ferrule
- 99: maintaining receptacle
- 101: minimum insertion diameter
- 103: ferrule insertion diameter
- 105: guiding collar
- 107: stop shoulder
- 109: lamella sleeve
- 111: transfer path

## Claims

1. Cable retainer insert (1) for a multi-strand cable (57), the cable retainer insert (1) being configured to be inserted in a housing (75) of a connector (1), the cable retainer insert (1) having a cable contact portion (21), a plurality of circumferentially spaced cable receptacles (5), each cable receptacle (5) being configured to receive at least one strand (59) of the multi-strand cable (57), each cable receptacle (5) further comprising a cable strand insertion opening (7) at a radially outward end (9), and a bottom (11) at an opposite radially inward end (13), wherein a circle (37) inscribed in the cable receptacle (5) and touching the bottom (11) of the cable receptacle (5) extends radially outwards beyond the cable strand insertion opening (7) **characterized in that** the cable retainer insert (1) comprises a housing contact portion (25) for electrically contacting the housing (75) of the connector, wherein the cable receptacles (5) extend through both the cable contact portion (21) and the housing contact portion (25) and wherein a diameter (27) of the cable contact portion (21) is smaller than a diameter (29) of the housing contact portion (25).

2. Cable retainer insert (1) according to claim 1, wherein the cable retainer insert (1) is electrically conductive.

3. Cable retainer insert (1) according to claim 1 or 2, wherein the cable retainer insert (1) comprises at least two cable retainer insert modules (3), which are positioned adjacent to one another in a circumferential direction (23).

4. Cable retainer insert (1) according to claim 3, wherein each cable retainer insert member comprises at least one cable receptacle (5).

5. Cable retainer insert (1) according to any one of claims 1 to 4, wherein the cable contact portion (21) and/or the housing contact portion (25) are cylindrical sections (31).

6. Cable retainer insert (1) according to any one of claims 1 to 5, wherein an axial length (33) of the cable contact portion (21) is larger than an axial length (35) of the housing contact portion (25).

7. Cable retainer insert (1) according to any one of claims 1 to 6, wherein the cable retainer insert (1) has at least one circumferential groove (39).

8. Cable retainer insert (1) according to claim 7, wherein the cable retainer insert (1) further comprises a clamping mechanism (43), which is configured to be inserted into the circumferential groove (39) and to extend across the cable strand insertion opening (7) in the circumferential direction (23).

9. Cable retainer insert (1) according to claim 7 or 8, wherein the cable retainer insert (1) further comprises a second groove (41) and a radially elastic member (47), wherein the second groove (41) is configured to receive the radially elastic member (47).

10. Cable retainer insert (1) according to claim 9, wherein the radially elastic member (47) is a continuous coil spring (49) or a circular self-locking ring (91).

11. Cable retainer insert (1) according to any one of claims 7 to 10, wherein the first and/or the second groove (39, 41) are open in a radially outward direction (15).

12. Cable retainer insert (1) according to any one of claims 1 to 11, wherein a center through hole (87) is provided, which extends in an axial direction (19).

13. Cable retainer insert (1) according to claim 12, wherein a center insert module (85) is provided in the center through hole (87).

14. Connector (51), comprising
- a connector housing (75) configured to receive a cable retainer insert (1);
- a cable retainer insert (1) according to any one of claims 1 to 13;
- a cable having an outer shielding (71) and a multitude of cable strands (59) with strand shieldings (61),
wherein the cable contact portion (21) is inserted into the outer shielding (71) and at least one of the multitude of cable strands (59) are inserted in the cable receptacles (5), wherein the cable retainer insert (1) is electrically contacted by the strand shieldings (61) of the cable strands (59) in the cable receptacles (5), and wherein the outer shielding (71) is arranged between the cable strand insertion openings (7) and a clamping mechanism (43) which extends circumferentially across the cable retainer insert (1).

## Patentansprüche

1. Kabelhaltereinsatz (1) für ein mehradriges Kabel (57), wobei der Kabelhaltereinsatz (1) so konfiguriert ist, dass er in ein Gehäuse (75) eines Verbinders (1) eingesetzt werden kann, wobei der Kabelhaltereinsatz (1) einen Kabelkontaktabschnitt (21), eine Vielzahl von in Umfangsrichtung beabstandeten Kabelaufnahmen (5) hat, wobei jede Kabelaufnahme (5) so konfiguriert ist, dass sie mindestens eine Ader (59) des mehradrigen Kabels (57) aufnimmt, wobei jede Kabelaufnahme (5) ferner eine Öffnung (7) zum Einführen eines Kabelstrangs an einem radial äußeren Ende (9) und einen Boden (11) an einem gegenüberliegenden, radial inneren Ende (13) umfasst, wobei ein Kreis (37), der in die Kabelaufnahme (5) eingeschrieben ist und den Boden (11) der Kabelaufnahme (5) berührt, sich radial nach außen über die Öffnung (7) zum Einführen eines Kabelstrangs hinaus erstreckt, **dadurch gekennzeichnet, dass** der Kabelhaltereinsatz (1) einen Abschnitt (25) zur Kontaktierung des Gehäuses (75) des Verbinders umfasst, wobei sich die Kabelaufnahmen (5) sowohl durch den Abschnitt (21) zur Kontaktierung des Kabels als auch durch den Abschnitt (25) zur Kontaktierung des Gehäuses erstrecken und wobei ein Durchmesser (27) des Abschnitts (21) zur Kontaktierung des Kabels kleiner als ein Durchmesser (29) des Abschnitts (25) zur Kontaktierung des Gehäuses ist.

2. Kabelhaltereinsatz (1) nach Anspruch 1, wobei der Kabelhaltereinsatz (1) elektrisch leitfähig ist.

3. Kabelhaltereinsatz (1) nach Anspruch 1 oder 2, wobei der Kabelhalteeinsatz (1) mindestens zwei Kabelhalteeinsatzmodule (3) umfasst, die in Umfangsrichtung (23) nebeneinander angeordnet sind.

4. Kabelhaltereinsatz (1) nach Anspruch 3, wobei jedes Kabelhaltereinsatzelement mindestens eine Kabelaufnahme (5) umfasst.

5. Kabelhaltereinsatz (1) nach einem der Ansprüche 1 bis 4, wobei der Abschnitt (21) zur Kontaktierung des Kabels und/oder der Abschnitt (25) zur Kontaktierung des Gehäuses zylindrische Abschnitte (31) sind.

6. Kabelhaltereinsatz (1) nach einem der Ansprüche 1 bis 5, wobei eine axiale Länge (33) des Abschnitts (21) zur Kontaktierung des Kabels (21) größer ist als eine axiale Länge (35) des Abschnitts (25) zur Kontaktierung des Gehäuses.

7. Kabelhaltereinsatz (1) gemäß einem der Ansprüche 1 bis 6, wobei der Kabelhaltereinsatz (1) mindestens eine Umfangsnut (39) aufweist.

8. Kabelhaltereinsatz (1) nach Anspruch 7, wobei der Kabelhaltereinsatz (1) ferner einen Klemmmechanismus (43) umfasst, der so konfiguriert ist, dass er in die Umfangsnut (39) eingesetzt werden kann und sich in Umfangsrichtung (23) über die Öffnung (7) zum Einführen des Kabelstrangs erstreckt.

9. Kabelhaltereinsatz (1) nach Anspruch 7 oder 8, wobei der Kabelhaltereinsatz (1) ferner eine zweite Nut (41) und ein radial elastisches Element (47) umfasst, wobei die zweite Nut (41) so konfiguriert ist, dass sie das radial elastische Element (47) aufnimmt.

10. Kabelhaltereinsatz (1) nach Anspruch 9, wobei das radial elastische Element (47) eine durchgehende Schraubenfeder (49) oder ein kreisförmiger selbstsichernder Ring (91) ist.

11. Kabelhaltereinsatz (1) nach einem der Ansprüche 7 bis 10, wobei die erste und/oder die zweite Nut (39, 41) in einer radial nach außen weisenden Richtung (15) offen sind.

12. Kabelhaltereinsatz (1) nach einem der Ansprüche 1 bis 11, wobei ein zentrales Durchgangsloch (87) vorgesehen ist, das sich in einer axialen Richtung (19) erstreckt.

13. Kabelhaltereinsatz (1) nach Anspruch 12, wobei ein zentrales Einsatzmodul (85) in dem zentralen Durchgangsloch (87) vorgesehen ist.

14. Verbinder (51), aufweisend
- ein Verbindergehäuse (75), das so konfiguriert ist, dass es einen Kabelhaltereinsatz (1) aufnimmt;
- einen Kabelhaltereinsatz (1) gemäß einem der Ansprüche 1 bis 13;
- einen Draht mit einer äußeren Abschirmung (71) und einer Vielzahl von Drahtlitzen (59) mit Litzenabschirmungen (61),
wobei der Abschnitt (21) zur Kontaktierung des Kabels in die äußere Abschirmung (71) eingesetzt ist und mindestens einer der Vielzahl von Drahtlitzen (59) in die Kabelaufnahmen (5) eingesetzt ist, wobei der Kabelhaltereinsatz (1) durch die Litzenabschirmungen (61) der Drahtlitzen (59) in den Kabelaufnahmen (5) elektrisch kontaktiert ist, und wobei die äußere Abschirmung (71) zwischen den Öffnungen (7) zum Einsetzen der Drahtlitzen (7) und einem Klemmmechanismus (43) angeordnet ist, der sich in Umfangsrichtung über den Kabelhaltereinsatz (1) erstreckt.

## Revendications

1. Insert de retenue de câble (1) pour un câble multi-torons (57), l'insert de retenue de câble (1) étant configuré pour être inséré dans un boîtier (75) d'un connecteur (1), l'insert de retenue de câble (1) ayant une partie de contact de câble (21), une pluralité de réceptacles de câble (5) espacés de manière circonférentielle, chaque réceptacle de câble (5) étant configuré pour recevoir au moins un toron (59) du câble multi-torons (57), chaque réceptacle de câble (5) comprenant en outre une ouverture d'insertion de toron de câble (7) au niveau d'une extrémité radialement extérieure (9), et un fond (11) au niveau d'une extrémité radialement intérieure opposée (13), dans lequel un cercle (37) inscrit dans le réceptacle de câble (5) et touchant le fond (11) du réceptacle de câble (5) s'étend radialement vers l'extérieur au-delà de l'ouverture d'insertion de toron de câble (7), **caractérisé en ce que**
l'insert de retenue de câble (1) comprend une partie de contact de boîtier (25) pour entrer en contact électrique avec le boîtier (75) du connecteur,
dans lequel les réceptacles de câble (5) s'étendent à la fois à travers la partie de contact de câble (21) et la partie de contact de boîtier (25) et dans lequel un diamètre (27) de la partie de contact de câble (21) est inférieur à un diamètre (29) de la partie de contact de boîtier (25).

2. Insert de retenue de câble (1) selon la revendication 1, dans lequel l'insert de retenue de câble (1) est électroconducteur.

3. Insert de retenue de câble (1) selon la revendication 1 ou 2, dans lequel l'insert de retenue de câble (1) comprend au moins deux modules d'insert de retenue de câble (3), qui sont positionnés adjacents l'un à l'autre dans une direction circonférentielle (23).

4. Insert de retenue de câble (1) selon la revendication 3, dans lequel chaque élément d'insert de retenue de câble comprend au moins un réceptacle de câble (5).

5. Insert de retenue de câble (1) selon l'une quelconque des revendications 1 à 4, dans lequel la partie de contact de câble (21) et/ou la partie de contact de boîtier (25) sont des sections cylindriques (31).

6. Insert de retenue de câble (1) selon l'une quelconque des revendications 1 à 5, dans lequel une longueur axiale (33) de la partie de contact de câble (21) est supérieure à une longueur axiale (35) de la partie de contact de boîtier (25).

7. Insert de retenue de câble (1) selon l'une quelconque des revendications 1 à 6, dans lequel l'insert de retenue de câble (1) a au moins une rainure circonférentielle (39).

8. Insert de retenue de câble (1) selon la revendication 7, dans lequel l'insert de retenue de câble (1) comprend en outre un mécanisme de serrage (43), qui est configuré pour être inséré dans la rainure circonférentielle (39) et pour s'étendre à travers l'ouverture d'insertion de toron de câble (7) dans la direction circonférentielle (23).

9. Insert de retenue de câble (1) selon la revendication 7 ou 8, dans lequel l'insert de retenue de câble (1) comprend en outre une seconde rainure (41) et un élément radialement élastique (47), dans lequel la seconde rainure (41) est configurée pour recevoir l'élément radialement élastique (47).

10. Insert de retenue de câble (1) selon la revendication 9, dans lequel l'élément radialement élastique (47) est un ressort hélicoïdal continu (49) ou un anneau autobloquant circulaire (91).

11. Insert de retenue de câble (1) selon l'une quelconque des revendications 7 à 10, dans lequel la première et/ou la seconde rainure(s) (39, 41) est/sont ouverte(s) dans une direction radialement vers l'extérieur (15).

12. Insert de retenue de câble (1) selon l'une quelconque des revendications 1 à 11, dans lequel un trou traversant central (87) est prévu, qui s'étend dans une direction axiale (19).

13. Insert de retenue de câble (1) selon la revendication 12, dans lequel un module d'insert central (85) est prévu dans le trou traversant central (87).

14. Connecteur (51), comprenant
- un boîtier de connecteur (75) configuré pour recevoir un insert de retenue de câble (1) ;
- un insert de retenue de câble (1) selon l'une quelconque des revendications 1 à 13 ;
- un câble ayant un blindage extérieur (71) et une pluralité de torons de câble (59) avec des blindages de torons (61),
dans lequel la partie de contact de câble (21) est insérée dans le blindage extérieur (71) et au moins l'un des multiples torons de câble (59) est inséré dans les réceptacles de câble (5), dans lequel l'insert de retenue de câble (1) est mis en contact électrique par les blindages de torons (61) des torons de câble (59) dans les réceptacles de câble (5), et dans lequel le blindage extérieur (71) est agencé entre les ouvertures d'insertion de toron de câble (7) et un mécanisme de serrage (43) qui s'étend de manière circonférentielle à travers l'insert de retenue de câble (1).
